## Europäisches Patentamt

## European Patent Office

## Office européen des brevets

(19)

(11) Veröffentlichungsnummer: **0 185 852**
**B1**

(12) # EUROPÄISCHE PATENTSCHRIFT

(45) Veröffentlichungstag der Patentschrift:
**07.01.88**

(51) Int. Cl.⁴: **F 42 B 15/00, B 64 D 27/26**

(21) Anmeldenummer: **85111501.4**

(22) Anmeldetag: **11.09.85**

(54) **Unbemannter Flugkörper.**

(30) Priorität: **10.10.84 DE 3437174**

(43) Veröffentlichungstag der Anmeldung:
**02.07.86 Patentblatt 86/27**

(45) Bekanntmachung des Hinweises auf die Patenterteilung:
**07.01.88 Patentblatt 88/1**

(84) Benannte Vertragsstaaten:
**FR GB IT**

(56) Entgegenhaltungen:
**DE - A - 2 935 044**
**DE - A - 3 133 339**

(73) Patentinhaber: **Messerschmitt-Bölkow-Blohm GmbH, Hünefeldstrasse 1-5, D-2800 Bremen 1 (DE)**

(72) Erfinder: **Dellinger, Jürgen, Am Osterfeld 24, D-2807 Achim-Uesen (DE)**
Erfinder: **Höppner, Heinzjochen, Klugkiststrasse 15, D-2800 Bremen (DE)**
Erfinder: **Krämer, Ulrich, Schwalbenstrasse 8, D-2808 Syke-Barrien (DE)**

(74) Vertreter: **Schramm, Ewald Werner Josef, ERNO Raumfahrttechnik GmbH Patentabteilung TW63 (TWB32) Postfach 10 78 45, D-2800 Bremen 1 (DE)**

# Beschreibung

Die Erfindung bezieht sich auf einen unbemannten Flugkörper und einem heckseitig angeordneten Propellerantrieb für den Marchsflug und einem hinter der Luftschraube des Propellerantriebs lösbar gehalterten Raketentriebwerk für die Startphase, dessen Schub über Schubstangen auf den Flugkörperrumpf übertragen wird, die in Umfangsrichtung zwischen einem das Raketentriebwerk tragenden Raketengestell und den Hinterkanten der Tragflächen sowie des Leitwerks angeordnet sind.

Ein Flugkörper dieser Art, der in diesem Fall aus einem Lager- und Transportbehälter heraus gestartet wird und der unter anderem zu Aufklärungszwecken eingesetzt wird, ist bereits bekannt. Bei diesen bekannten Flugkörpern erstrecken sich die Schubstangen von den Hinterkanten der Tragflächen des Leitwerks, mit denen sie fest verbunden sind, aus in rückwärtiger Richtung und stützen sich an entsprechenden Auflageflächen an den Aussenbereichen des sternförmig ausgebildeten Raketengestells ab. Die Luftschraube des Propellertriebwerks, das schon vor dem Start des Flugkörpers angelassen wird, bewegt sich dabei innerhalb des zwischen dem Flugkörper und dem Raketengestell gebildeten und von den Schubstangen in radialer Richtung begrenzten Raumes. Nach dem Abbrand des Startraketentriebwerks, d.h. wenn dessen Schub geringer als der vom Propellerantrieb gelieferte Vortrieb wird, löst sich bei diesem bekannten Flugkörper das Raketengestell selbsttätig von den Schubstangen und fällt zu Boden.

Der Erfindung liegt die Aufgabe zugrunde, einen derartigen Flugkörper so auszubilden, dass bei Wahrung der sich aus der Konzeption einer durch den Flugkörperschwerpunkt verlaufenden zentralen Schubbeaufschlagung durch das Startraketentriebwerk ergebenden Vorteile, dessen Flugeigenschaften weiter verbessert werden. Dabei soll zugleich gewährleistet werden, dass der Trennvorgang zwischen Flugkörper und Startrakete reibungslos vonstatten geht und dass ausserdem bei einem wiederverwendbaren Flugkörper eine sichere Landung möglich ist.

Die Erfindung löst diese Aufgabe durch die im kennzeichnenden Teil des Patentanspruchs 1 angegebenen Merkmale. Vorteilhafte Weiterbildungen des erfindungsgemässen Flugkörpers, die vor allem möglichst einfache und funktionssichere Ausführungsformen betreffen, sind in den Unteransprüchen angegeben.

Der Flugkörper der Erfindung besitzt dabei den Vorteil, dass eine Kollision zwischen der Luftschraube des Propellertriebwerks und einer der Schubstangen vermieden wird und dass zugleich mit der Trennung vom Startraketengestell zumindest ein Teil der Schubstangen vom Flugkörper entfernt wird. Insbesondere bei einem Nurflügelgerät erfordert die Tatsache, dass zur Vermeidung von etwaigen Beschädigungen der Luftschraube beim Trennvorgang die Trennebene zwischen Flugkörper und Raketengestell möglichst im Bereich der Propellerkreisebene bzw. noch dahinter liegen muss, relativ lange Schubstangen. Diese aber würden, sofern sie sämtlich am Flugkörper verblieben, nicht nur im Flug zusätzlichen Luftwiderstand verursachen, sondern in der Landephase, beispielsweise bei einem Fallschirmausstoss bzw. beim Aufsetzen, eine zusätzliche Beeinträchtigung der Funktionssicherheit darstellen. Zudem würden sie eine beträchtliche Gewichtsbelastung für den Flugkörper darstellen. Die Erfindung ermöglicht demgegenüber zumindest einen Teil der Schubstangen zusammen mit dem Raketengestell nach Beendigung der Startphase abzuwerfen.

Die Schubkräfte des Startraketentriebwerks werden dabei über die Drehpunkte in die Schubstangen und von diesen über die Aufnahmepunkte am Flugkörperrumpf direkt auf diesen geleitet. Die in den Ansprüchen 4 und 5 angegebenen Massnahmen dienen dabei insbesondere der Aufnahme etwaig auftretender Seitenlasten.

Im folgenden soll die Erfindung anhand von in der Zeichnung dargestellten Ausführungsbeispielen näher erläutert werden. Es zeigen:

Fig. 1 einen Flugkörper gemäss der Erfindung in Seitenansicht,

Fig. 2 den rechten Teil der in Fig. 1 dargestellten Anordnung in vergrösserter Darstellung,

Fig. 3 einen Detailschnitt durch die Anordnung gemäss Fig. 2, wobei der in Flugrichtung rechte Teil dieser Anordnung von vorn gesehen dargestellt ist,

Fig. 4 die Anordnung gemäss Fig. 2 in Draufsicht,

Fig. 5 und 6 eine zweite Ausführungsform der in Fig. 2 dargestellten Anordnung in perspektivischer Darstellung,

Fig. 7 den Flugkörper gemäss Fig. 1 im Augenblick des Trennvorgangs.

In den Figuren sind gleiche Bauteile mit den gleichen Bezugszeichen versehen.

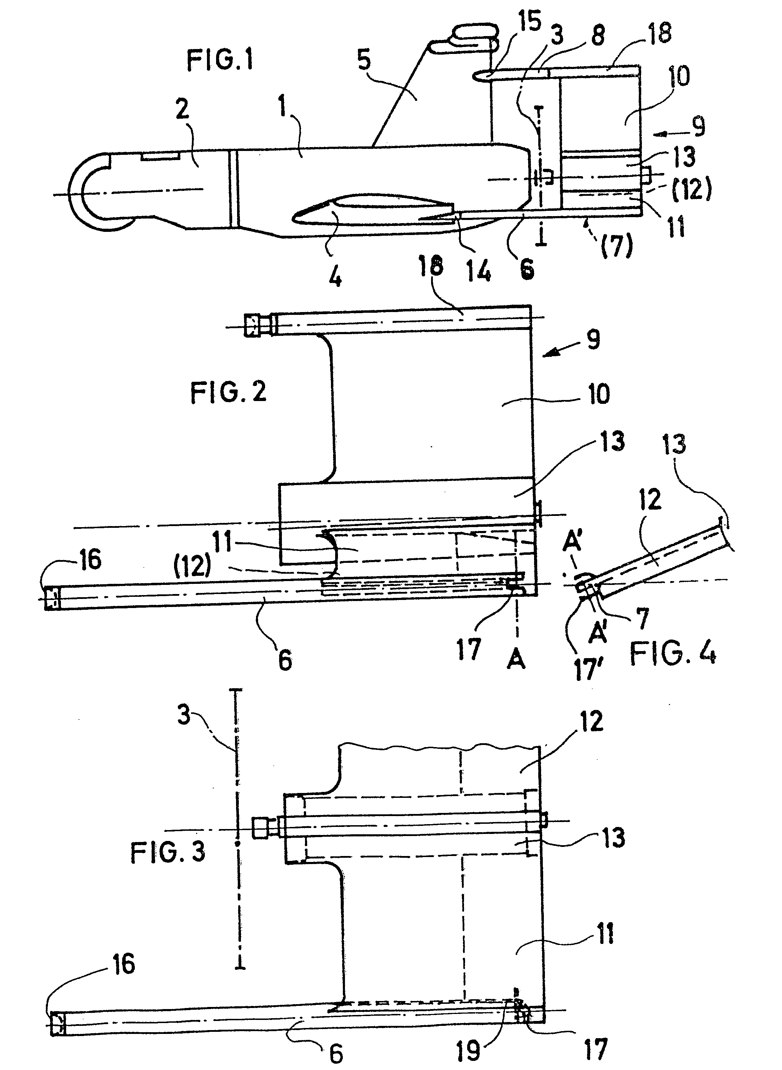

Bei dem in Fig. 1 dargestellten Fluggerät handelt es sich um einen unbemannten, widerverwendbaren Flugkörper, eine sogenannte Drohne. Derartige Flugkörper werden beispielsweise zu Aufklärungszwecken eingesetzt. Der Bugbereich 2 des Flugkörperrumpfes 1 ist, entsprechend dem vorgesehenen Einsatzzweck, zur Aufnahme von Nutzlast wie elektronischem Überwachungsgerät, ausgebildet. Im Heckbereich ist im Rumpfinnern ein hier nicht dargestelltes Propellertriebwerk angeordnet, das auf eine Luftschraube 3 wirkt. An den Hinterkanten der Tragflächen 4 sowie des Seitenleitwerks 5 stützt sich bei der in Fig. 1 dargestellten Anordnung über Schubstangen 6, 7 (letztere in Fig. 1 und 2 nicht erkennbar) sowie 8 ein Raketengestell 9 ab. Dieses Raketengestell 9 besteht aus, im Fall des hier dargestellten Ausführungsbeispiels der Erfindung, drei sternförmig angeordneten, gleichartigen Stabilisatorflächen 10, 11 sowie 12, in deren Zentrum ein Raketentriebwerb 13 angeordnet ist.

Wie die in Fig. 1 dargestellte Anordnung erkennen lässt, weisen sowohl die Tragflächen 4 als auch das Seitenleitwerk 5 rückwärtige Ansätze 14, bzw. 15 auf, von denen der Ansatz 15 unmittelbar in die, in diesem Fall fest mit dem Seitenleitwerk 5 verbundene Schubstange 8 übergeht. Dagegen weisen die Ansätze 14 (von denen in Fig. 1 nur einer sichtbar ist) einen sphärisch geformten rückwärtigen Endbereich auf, der zugleich als Anlagepunkt für die Schubstange 6 bzw. auf der gegenüberliegenden Seite des Tragflügels für die Schubstange 7 dient.

Dieses geht im Detail auch aus Fig. 2 hervor. Diese Figur zeigt, dass die Stirnfläche 16 der Schubstange 6 konkav gewölbt ist und so dem vom Ansatz 14 gebildeten Anlagepunkt angepasst ist. Gleiches gilt für die hier nicht dargestellte Schubstange 7. Aus den Fig. 2 und 3 ist ferner ersichtlich, dass die Schubstangen 6, 7 jeweils mit ihrem rückwärtigen Ende an den Stabilisatorflächen 11 bzw. 12 angelenkt sind, wobei ihre vom Drehgelenk 17 bzw. 17' gebildeten Schwenkachsen A, A' in etwa senkrecht auf der radial nach aussen verlaufenden jeweils zugeordneten Stabilisatorfläche 11 bzw. 12 stehen. Die Aussenkanten der Stabilisatorflächen 11 bzw. 12 sind dabei so geformt, dass die Schubstangen 6 bzw. 7 formschlüssig anliegen. Fig. 2 zeigt ausserdem noch, dass die Stabilisatorfläche 10 im Fall des hier dargestellten Ausführungsbeispiels der Erfindung mit einem festen zylinderförmigen Ansatz 18 gleichen Durchmessers wie die Schubstange 8 versehen ist, die in diesem Fall, wie erwähnt, fest mit dem Seitenleitwerk 5 des Flugkörpers verbunden ist. Auch die Stirnfläche dieses, im dargestellten Fall zu Justierzwecken längenveränderlichen, Ansatzes 18 ist, entsprechend der Form der Schubstange 8, konkav ausgebildet.

Bei dem in den Fig. 2 bis 4 dargestellten Ausführungsbeispielen des erfindungsgemässen Flugkörpers sind die Schubstangen 6 und 7 jeweils durch eine im Abstand vom Drehgelenk 17 angreifende Schenkelfeder 19 belastet, die das jeweils vordere Ende der Schubstange 6, 7 um die Schwenkachse A bzw. A' nach aussen zu drücken sucht. Wie Fig. 4 schliesslich noch zeigt, sind die Schwenkachsen A, A' jeweils in bezug auf die Längsachse der Schubstangen 6 bzw. 7 im Abstand radial nach aussen versetzt, um so etwaig auftretende Seitenlasten aufzunehmen. Für den gleichen Zweck können die Schubstangen 6 und 7 in der Startphase auf den entsprechenden Stabilisatorflächen 11 bzw. 12 arretierbar ausgebildet sein.

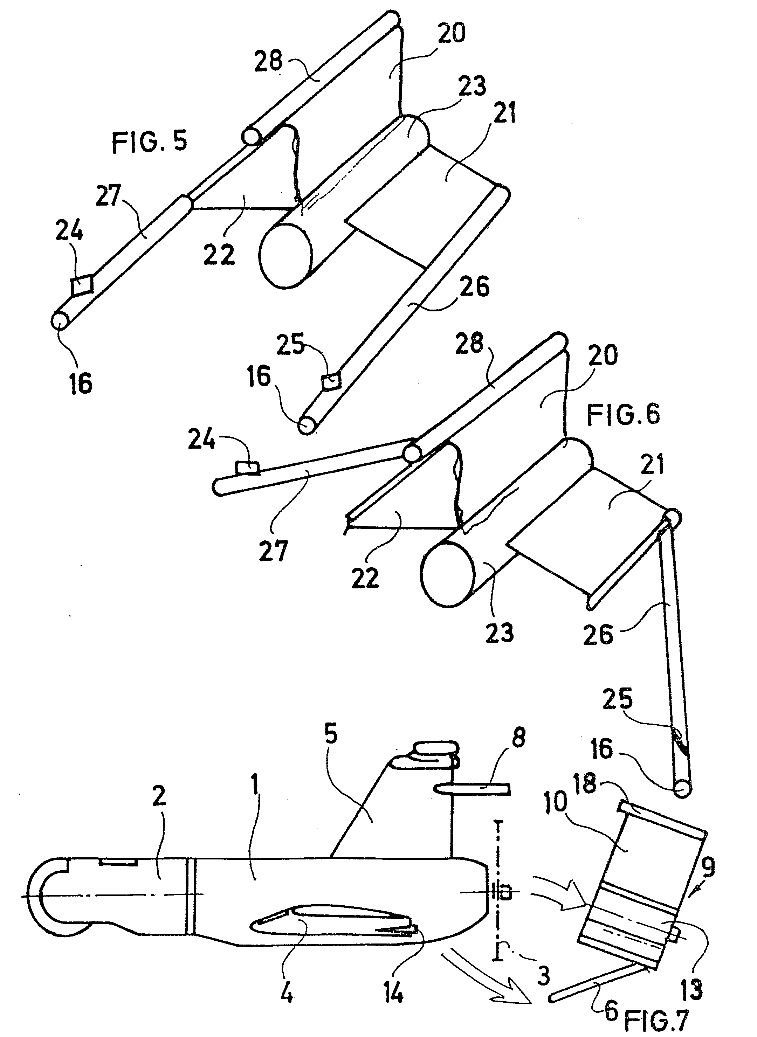

Das in den Fig. 5 und 6 dargestellte zweite Ausführungsbeispiel der Erfindung unterscheidet sich vom ersten dadurch, dass in diesem Fall an Stelle der Schenkelfedern 19 Leitbleche 24 bzw. 25 vorgesehen sind. Diese sind auf den Schubstangen 26 und 27 unter einem Winkel in Bezug auf deren Längsachse angeordnet, so dass sie in der Startphase, wenn die Schubstangen 26 und 27 an den zugehörigen Stabilisatorflächen 21 und 22 anliegen, auch schräg in bezug auf die Flugkörperlängsachse stehen und damit gegen die Luftströmung angestellt sind. Die Stabilisatorfläche 20 sowie der Ansatz 28 entsprechen den jeweiligen Bauteilen im ersten Ausführungsbeispiel.

Die Funktionsweise des erfindungsgemässen Flugkörpers geht aus Fig. 7 hervor. In der Startphase liegt das das Raketentriebwerk 13 tragende Raketengestell 9 zunächst, wie in Fig. 1 dargestellt, mit den Schubstangen 6 und 7 sowie dem Ansatz 18 (bzw. den entsprechenden Bauteilen 26, 27 und 28 des zweiten Ausführungsbeispiels) an den zugehörigen Anlagepunkten 14 bzw. der Schubstange 8 an. Durch das Zusammenwirken der sphärisch bzw. konkav geformten Flächen in diesen Punkten und den in bezug auf die Schubstangen aussermittig angesetzten Drehgelenken 17 (A-A') wird dabei aufgrund der Reibung in diesen Flächen und der erzeugten, auf den Boosterstern gerichteten Kraft, die Kraft der Schenkelfedern 19 bzw. der Leitbleche 24 und 25, die die Schubstangen jeweils nach aussen zu verschwenken suchen, kompensiert. Erst, wenn die Schubkraft der Startrakete nachlässt, reichen die aufgebrachten Kräfte nicht mehr aus und die Schubstangen 6 und 7 (bzw. 26 und 27) werden nach aussen gedrückt; das Raketengestell löst sich vom Flugkörper und fällt zu Boden. Da die Schubstangen, die am Raketengestell angelenkt sind, unverzüglich bis in ihre äusserste Stellung verschwenkt werden, können sie in dieser Trennphase nicht mit der Luftschraube des Propellerantriebes kollidieren, so dass eine Beschädigung des Flugkörpers ausgeschlossen ist.

## Patentansprüche

1. Unbemannter Flugkörper mit einem heckseitig angeordneten Propellerantrieb für den Marschflug und einem hinter der Luftschraube (3) des Propellerantriebes lösbar gehalterten Raketentriebwerk (13) für die Startphase, dessen Schub über Schubstangen (6, 7, 8, 26, 27, 28) auf den Flugkörperrumpf (1) übertragen wird, die in Umfangsrichtung zwischen einem das Raketentriebwerk (13) tragenden Raketengestell (9) und den Hinterkanten der Tragflächen (4) sowie des Leitwerkes (5) angeordnet sind, dadurch gekennzeichnet, dass wenigstens zwei Schubstangen (6, 7, 26, 27) fest am Raketengestell (9) gehalten und an diesem radial nach aussen verschwenkbar angelenkt sind, wobei ihre dem Flugkörperrumpf (1) zugewandten Stirnflächen (16) in der Startphase formschlüssig an entsprechenden Auflagerpunkten (14) der Tragflächen (4) anliegen.

2. Flugkörper nach Anspruch 1, dadurch gekennzeichnet, dass die Schubstangen (6, 7) jeweils durch eine im Abstand von ihrer jeweiligen Schwenkachse (A, A') angreifende Feder (19) beaufschlagbar sind.

3. Flugkörper nach Anspruch 1, dadurch gekennzeichnet, dass die Schubstangen (26, 27) jeweils mit einem im Abstand von der Schwenkachse (A, A') und in bezug auf die Flugrichtung vor dieser angeordnet, schräg gegenüber der Flugkörperlängsachse angestellten Leitblech (24, 25) versehen sind.

4. Flugkörper nach einem der Ansprüche 1 bis 3, dadurch gekennzeichnet, dass die Schubstangen (6, 7, 26, 27) in der Startphase am Raketengestell (9) arretierbar gehalten sind.

5. Flugkörper nach einem der Ansprüche 1 bis 4, dadurch gekennzeichnet, dass die jeweilige Schwenkachse (A, A') der Schubstangen (6, 7, 26, 27) jeweils in radialer Richtung um einen Abstand gegenüber deren jeweiliger Längsachse nach aussen versetzt verläuft.

## Claims

1. An unmanned aircraft with a rearwardly arranged propellor drive for cruising flight and, for the starting phase, behind the propellor (3) of the propellor drive a releasably held rocket propulsion unit (13), of which the thrust is transmitted to the aircraft body (1) via thrust rods (6, 7, 8, 26, 27, 28) which are arranged in the circumferential direction between a rocket frame (9) carrying the rocket propulsion unit (13) and the rear edges of the wings and of the tail unit (5), characterised in that at least two thrust rods (6, 7, 26, 27) are securely mounted on the rocket frame (9) and articulated to be pivotal radially outwardly thereof, their front faces (16) turned towards the aircraft body (1) abutting in form-locking manner against corresponding bearing points (14) of the wings (4).

2. An aircraft according to claim 1, characterised in that the thrust rods (6, 7) are each actuable by a spring (19) acting at a spacing from the respective pivotal axis (A, A').

3. An aircraft according to claim 1, characterised in that the thrust rods (26, 27) are each provided with a fin (24, 25) arranged at a spacing from the pivotal axis (A, A') and forwardly thereof with reference to the direction of flight, and set inclined relative to the longitudinal axis of the aircraft.

4. An aircraft according to any one of claims 1 to 3, characterised in that in the start phase the thrust rods (6, 7, 26, 27) are lockably mounted on the rocket frame (9).

5. An aircraft according to any one of claims 1 to 4, characterised in that each pivotal axis (A, A') of the thrust rods (6, 7, 26, 27) extends offset outwardly in the radial direction at a spacing relative to their respective longitudinal axis.

## Revendications

1. Missile sans pilote comportant un entraînement à hélice à sa partie arrière pour le vol de croisière et un moteur (15) à fusée, monté de manière amovible derrière l'hélice (3) de l'entraînement à hélice, moteur de fusée destiné à la phase de démarrage et dont la poussée est transmise au fuselage (1) du missile par des barres de poussée (6, 7, 8, 26, 27, 28), barres qui sont prévues dans la direction périphérique entre le châssis (9) portant le moteur à fusée (13) et le bord arrière des surfaces portantes (4) ainsi que du volet de direction (5), caractérisé en ce qu'au moins deux barres de poussée (6, 7, 26, 27) sont montées fixes sur le châssis de fusée (9) en étant articulées sur celui-ci de manière à pouvoir pivoter radialement vers l'extérieur, alors que la surface frontale (16) de ces barres, tournée vers le fuselage (1) s'appuie en phase de démarrage par une liaison par la forme sur des points d'appui correspondants (14) des surfaces portantes (4).

2. Missile selon la revendication 1, caractérisé en ce que les barres de poussée (6, 7) sont respectivement soumises à l'action d'un ressort (19) agissant sur elles à une certaine distance de l'axe de pivotement respectif (A, A').

3. Missile selon la revendication 1, caractérisé en ce que les barres de poussée (26, 27) sont respectivement munies d'aubes (24, 25) situées à une certaine distance de leur axe de pivotement (A'), en amont de ces axes dans la direction de vol et de manière inclinée par rapport à l'axe du fuselage.

4. Missile selon l'une quelconque des revendications 1 à 3, caractérisé en ce que les barres de poussée (6, 7, 26, 27) sont maintenues de manière à être retenues en phase de départ du châssis à fusée (9).

5. Missile selon l'une des revendications 1 à 4, caractérisé en ce que l'axe de pivotement respectif (A, A') des barres de poussée (6, 7, 26, 27) est chaque fois décalé vers l'extérieur dans la direction radiale par rapport à l'axe longitudinal respectif.

0 185 852

FIG.1

FIG.2

FIG.4

FIG.3

5

0 185 852

FIG. 5

FIG.6

FIG.7